# DEMANDE DE BREVET EUROPEEN

(11) **EP 4 609 701 A1**
(43) Date de publication de la demande: **03.09.2025**
(21) Numéro de dépôt: 24160642.5
(22) Date de dépôt: 29.02.2024
(51) Int. Cl.: A01G 9/029, A01G 9/02

(54) **POT ET TAPIS BIODÉGRADABLES**

(71) Demandeur: Swiss-b, Khan Rashed, 1723 Marly (CH)
(72) Inventeur: Khan, Rashed, 1723 Marly (CH)
(74) Mandataire: P&TS SA (AG, Ltd.)

(57) **Abrégé**

La présente divulgation concerne un contenant (1) biodégradable dont la paroi périphérique est à bases de fibres végétales combinées à au moins un agent rigidifiant naturel (14) adapté à rendre la paroi périphérique (12) rigide. La paroi périphérique est en outre imbibée d'un agent protecteur non-aqueux. La divulgation concerne en outre un procédé de fabrication d'un tel contenant et sur un tapis végétal utilisé pour la fabrication d'un tel contenant.

## Description

### Domaine technique

La présente invention concerne un contenant biodégradable, tel qu'un pot ou un sac de lestage, adapté pour la culture de plants. Elle concerne en outre un procédé permettant de fabriquer de tels contenants biodégradables. La présente invention porte en outre sur un tapis végétal utilisé comme matière première dans la confection du contenant.

### Etat de la technique

Les contenants biodégradables sont souvent utilisés pour la mise en terre de jeunes végétaux sans avoir à les dépoter pour les transplanter, que ce soit en intérieur ou en extérieur. Les jeunes pousses peuvent ainsi être cultivées dans un environnement dont la température et/ou l'hygrométrie sont adéquates, puis transplantées. Des cultures peuvent ainsi être préparées sous serres en prévision du printemps, de sorte à pouvoir végétaliser rapidement des espaces externes tels que des jardins privés ou publics, des potagers, des maraichages, des massifs floraux et tout autre espaces verts.

Bien que leur constitution soit biodégradable, les contenants actuellement disponibles incluent souvent des additifs non naturels, notamment pour en garantir la bonne tenue structurelle. Sans de tels additifs, les matériaux biodégradables peuvent manquer de rigidité et conduire à des déformations du pot préjudiciables à son utilisation. En particulier, des plastifiants ou d'autres agents rigidifiants non naturels peuvent y être intégrés, ce qui est nuisible à l'environnement.

En outre, les contenants actuellement disponibles sont souvent constitués de matière organique humide, qui favorise l'apparition de germes, champignons ou de pourritures, lesquels peuvent nuire à la santé des plantes cultivées ou à leur bon développement.

Il y a donc matière à développer des solutions plus naturelles, voir exclusivement naturelles qui préservent les plants de toutes contamination.

### Bref résumé de l'invention

Un but de la présente invention est de proposer un contenant biodégradable, voir entièrement biodégradable, présentant une rigidité structurelle suffisante pour la culture de jeunes plants, au moins pendant quelques mois. L'objectif est de proposer un contenant biodégradable qui puisse ensuite permettre la manipulation ou la manutention des jeunes plants, notamment pour leur distribution et leur vente dans des circuits commerciaux ou directement dans des zones de culture extérieures. Un objectif est en particulier de pouvoir mettre en pleine terre les jeunes plants sans avoir à les dépoter de sorte que le contenant se dégrade naturellement sans polluer les sols. L'objectif est en outre de permettre ou de favoriser la culture de plantes hors sol ou dans des sols inadaptés.

Un autre but de la présente invention est de proposer un contenant biodégradable rigide permettant de limiter ou de supprimer l'apparition de germes, champignons ou moisissures susceptibles de nuire aux plantes cultivées.

Un autre objectif de la présente invention est de proposer un procédé de fabrication de contenants biodégradables, en particulier totalement biodégradables, qui soit bon marché et compatible avec une économie localisée voire une économie circulaire.

Un autre objectif est de proposer des contenants et un procédé de fabrication dont le bilan carbone est faible, de préférence nul, et permettant avantageusement de séquestrer du carbone.

Selon l'invention, ces buts sont atteints notamment au moyen des contenants et du procédé objet des revendications indépendantes et détaillés dans les revendications qui en dépendent. En l'occurrence, les contenants biodégradables et le procédé correspondant, selon la présente invention, impliquent une combinaison d'agents agglomérants naturels et d'extraits végétaux, ainsi que des méthodes de formage adéquates. Cette approche s'inscrit dans une démarche de développement durable et d'économie circulaire, visant à réduire l'impact environnemental de la production horticole et à promouvoir l'utilisation de matériaux renouvelables et biodégradables.

Les contenants ici-décrits désignent tout pot biodégradable permettant de contenir un substrat adapté à la culture de plantes. Un tel substrat désigne par exemple de la terre, du terreau, du compost, des agglomérats, ainsi que leurs éventuelles combinaisons, pouvant contenir en outre des engrais et/ou tout autre additif utile. Les contenants objet de la présente description désignent en outre des sacs de lestage, des sacs à silo ou tout équivalent, propre à protéger et cultiver les plantes, notamment dans des sols peu adaptés ou hors sols. Les sacs de lestage sont généralement de dimension plus grande que les pots de levage. Ils peuvent par exemple présenter une contenance comprise entre 5 et 50 litres ou entre 10 et 40 litres, voire de 15 à 30 litres selon les besoins.

Les matériaux biodégradables incluent des agents agglomérants écologiques tels que le biochar, diverses fibres végétales (chanvre, lin, jute, coton, bois), la bouse de vache, le crottin de cheval, les déchets de volaille, les algues, et potentiellement des bactéries lactiques. Ces agents seront mélangés avec des extraits végétaux comme l'amidon, le caoutchouc, ou le latex pour conférer au matériau une forme rigide. Le biochar est reconnu pour ses propriétés bénéfiques dans l'amélioration de la qualité du sol.

La fabrication des contenants selon la présente invention implique des opérations de formage telles que le pressage, l'injection et la pulpe moulée. Ces techniques permettront de créer des contenants biodégradables aux formes variées tout en respectant les normes de durabilité. Le pressage est spécifiquement adapté à la production des contenants biodégradables. L'injection, implique d'injecter les matériaux biodégradables dans des moules afin de former les contenants, en particulier les pots. La technique de la pulpe moulée, est adaptée aux mélanges de matériaux biodégradables afin de créer des contenants respectueux de l'environnement. Les matériaux biodégradables et les procédés utilisés permettent de produire des contenants biodégradables qui non seulement répondent aux besoins des plantes et des jardiniers mais contribuent également à la réduction des déchets plastiques dans l'industrie horticole. L'objet de la présente invention est en particulier d'offrir une alternative écologique significative aux pots en plastique traditionnels, en ligne avec les principes de l'agriculture biologique et de la durabilité environnementale. L'objet de la présente invention est en outre d'offrir un grand nombre d'utilisations des matériaux biodégradables et de diversifier ainsi les produits pouvant être obtenus à partir d'un élément biodégradable intermédiaire tel qu'un feutre ou un tapis.

Cette solution présente notamment l'avantage par rapport à l'art antérieur de limiter le bilan carboné voir de le diminuer.

### Brève description des figures

Des exemples de mise en oeuvre de l'invention sont indiqués dans la description illustrée par les figures ci-dessous :
- Figure 1 : Pot selon un mode de réalisation de la présente invention,
- Figure 2 : Pot selon un autre mode de réalisation de la présente invention,
- Figure 3 : Pot selon un autre mode de réalisation de la présente invention,
- Figure 4 : Procédé selon un mode de réalisation de la présente invention,
- Figure 5 : Procédé selon un autre mode de réalisation de la présente invention,
- Figure 6 : Représentation schématique de l'étape de revêtement dans le procédé selon un mode de réalisation de la présente invention,
- Figure 7 : Représentation schématique de l'étape d'imprégnation dans le procédé selon un mode de réalisation de la présente invention,
- Figure 8 : Représentation schématique de l'étape de façonnage dans le procédé selon un mode de réalisation de la présente invention,
- Figures 8a, 8b, 8c : Exemples de pliage d'un pot selon un mode de réalisation de la présente invention,
- Figures 9a, 9b : Représentation schématique de l'étape de formage dans le procédé selon un mode de réalisation de la présente invention,
- Figure 10: Représentation schématique d'une utilisation d'un tapis végétal selon un mode de réalisation de la présente invention,
- Figure 11 : Représentation schématique de l'étape de façonnage dans le procédé selon un mode de réalisation de la présente invention,

### Exemple(s) de mode de réalisation de l'invention

Selon un mode de réalisation le contenant de la présente invention est un pot. Le pot **1** selon la présente description comporte une paroi périphérique **12.** La paroi périphérique **12** comprend un bord supérieur **11a** délimitant une ouverture **13.** L'ouverture **13** permet de remplir le pot **1** avec de la terre ou tout substrat adapté à la culture d'une plante. Elle peut comprendre en outre un bord inférieur **11b** délimitant le fond du pot 10c. La paroi périphérique **12** comporte une surface externe **10b** et une surface interne **10a.** La surface interne **10a** est orientée vers l'intérieur du pot **1.** La surface externe **10b** est à l'opposé, orientée vers l'extérieur du pot **1.** La paroi périphérique **12** délimite ainsi un volume dans lequel peut être disposé un milieu de culture pour une plante, telle qu'un substrat, de la terre ou tout autre support adéquat.

La paroi périphérique **12** comprend essentiellement un ou plusieurs matériaux biodégradables. Avantageusement, la paroi **12** est exclusivement constituée de matériaux biodégradables. Les matériaux biodégradables sont ici de préférence des matériaux naturels, c'est-à-dire disponibles tels quels dans l'environnement naturel et n'étant pas manufacturés par l'Homme. Ils peuvent néanmoins être transformés de sorte à permettre la fabrication du pot ici décrit. Les matériaux biodégradables sont ici compris comme appartenant à la biomasse. Ils peuvent être en l'occurrence composés de fibres végétales telles que des fibres cellulosiques, des fibres ligneuses ou tout équivalent. Les matériaux biodégradables peuvent alternativement être issus de sources animales. C'est notamment le cas pour les fibres de laines.

Les matériaux biodégradables selon la présente invention peuvent être issus des activités humaines telles que l'agriculture, le déboisement, le défrichage, le maraichage, les activités d'entretien d'espaces verts, y compris en zone urbaine, les opérations de nettoyage, les activités liées à l'élevage, notamment de moutons, et tout autre activité permettant de produire ou collecter de la biomasse.

De préférence, les matériaux biodégradables utilisés dans la présente invention, s'ils résultent de l'activité humaine, ne sont pas spécifiquement produits pour cet usage mais résultent de sous-produits non valorisés, notamment des déchets végétaux. Alternativement, les produits biodégradables selon la présente invention ou une partie d'entre eux sont produits et récoltés localement et dans des conditions respectueuses de l'environnement pour cet usage, de préférence faiblement ou non carbonées.

Alternativement ou en plus, une partie des matériaux biodégradables utilisés pour la présente invention provient des filières de recyclage, par exemple de certains textiles usagés tels que le coton ou la laine ou d'autres types de fibres textiles, pour autant qu'ils ne comportent pas d'additifs synthétiques et/ou non biodégradables.

Selon un mode de réalisation, le matériau biodégradable de la paroi périphérique **12** comprend des fibres végétales issues du chanvre, du lin, de la jute ou d'un mélange des telles fibres. Ces fibres végétales peuvent être associées à d'autres fibres moins résistantes.

Le matériau biodégradable peut faire l'objet d'un traitement préalable tel qu'un chauffage, un séchage, ou un traitement mécanique tel qu'une homogénéisation ou tout autre traitement adéquat.

Les fibres végétales peuvent être tissées ou non tissées. De préférence, la paroi périphérique **12** prend la forme d'un feutre ou d'une feutrine. Alternativement, la paroi périphérique **12** prend la forme d'un agglomérat, dont la cohésion résulte d'une opération de pressage décrite plus loin.

Un feutre ou une feutrine présente une faible tenue mécanique en soi. En d'autres termes, un feutre ou une feutrine reste trop souple en l'absence d'autres constituants pour garantir le maintien de la structure tridimensionnelle du pot. La paroi périphérique **12** étant disposée selon une orientation non horizontale, verticale ou inclinée, elle est susceptible de s'affaisser. Augmenter la densité de la paroi périphérique **12** peut contribuer à améliorer sa tenue mécanique mais nécessite plus de matière. En outre, les temps de biodégradation en sont allongés significativement.

Le feutre ou la feutrine constituant la paroi périphérique **12** présente un grammage compris entre 200 et 2500 g/m², de préférence entre 300 et 2000 g/m² ou de l'ordre de 50 à 1500 g/m² Le grammage peut néanmoins être adapté selon les besoins, en particulier selon la durée escomptée d'utilisation du pot, ou le délai escompté pour sa décomposition. Il peut en outre être modifié en fonction des éventuels additifs présents tel que des agents protecteurs ou une couche de charbon, comme explicité plus bas. Par exemple, un grammage de l'ordre de 500 à 600 g/m² permet un délai avant dégradation de l'ordre de 6 à 8 mois lorsque le pot reste hors terre. Les délais avant dégradation peuvent être allongés dans le cas où le feutre ou la feutrine est combiné à des composants tels que des agents rigidifiants 14, protecteurs ou avec une couche de charbon. Par exemple, un grammage de 1200 g/m² peut autoriser un délai avant dégradation de 3 à 4 ans lorsque le feutre ou la feutrine est imbibé d'un agent protecteur et d'une couche de charbon, et lorsqu'il est utilisé comme paillage.

Le pot selon la présente invention est conçu pour être utilisable pendant une durée de 3 à 10 mois avant de se dégrader. Cette durée correspondant approximativement au temps nécessaire pour cultiver un plant, le distribuer ou le vendre et le replanter en pleine terre. Il est ensuite avantageux que le pot se dégrade dans la terre avant la saison suivante pour permettre de replanter d'autre nouvelles pousses sans être gêné par d'éventuels restes de pots non encore dégradés.

La paroi périphérique **12** du pot **1** selon la présente invention comprend au moins un agent rigidifiant **14** permettant de la rigidifier de sorte qu'elle confère au pot une forme tridimensionnelle stable. L'agent rigidifiant peut être choisi de sorte à ne pas retarder inutilement ou démesurément la dégradation du pot. L'agent rigidifiant est par conséquent lui-même biodégradable, selon les termes de la présente description. Selon un mode de réalisation, les matériaux biodégradables comportent au moins un agent rigidifiant. L'agent rigidifiant peut comprendre ou consister en un excrément d'herbivore tel que de la bouse de vache et/ou du crottin de cheval. L'agent rigidifiant **14** peut alternativement ou en plus comprendre des déchets verts partiellement dégradés tels que des résidus de tonte de gazon ou de feuilles d'arbres. De tels composants comprennent généralement une proportion d'eau importante. Ils peuvent être traités au préalable de sorte à séparer les constituants solides de l'eau. Ainsi les constituants solides peuvent être associés au matériau de la paroi périphérique **12** sans y apporter trop d'humidité. Le taux d'humidité de l'agent rigidifiant **14** peut alors être réduit à moins de 20% ou 10% ou 5% selon les besoins. En d'autres termes, le taux d'humidité de l'agent rigidifiant peut être compris entre 5% et 10% ou entre 10% et 20% selon les besoins.

Alternativement ou en plus, l'agent rigidifiant **14** peut comprendre ou consister en un extrait végétal tel que de l'amidon, du caoutchouc ou du latex ou une combinaison de tels extraits. L'agent rigidifiant **14** est dans ce cas le plus souvent sous forme liquide ou visqueuse et peut aisément imprégner le matériau de la paroi périphérique **12.** Les extraits végétaux utilisés comme agents rigidifiants peuvent subir au préalable un traitement, visant par exemple à les séparer de contaminants éventuels, à en réduire le taux d'humidité, à en faire des mélanges ou tout autre traitement jugé nécessaire.

Selon un mode de réalisation, le matériau biodégradable désigne des fibres végétales telles que du chanvre, du lin, de la jute, des orties, du kénaf, du coton, du Kapok, de la noix de coco, de l'ananas, du bananier, du raphia, du sisal, des fibres animales telles que de la laine de mouton, de chèvre, de lama ou du poil de lapin, des déchets agricoles tels que du fumier d'animaux, comprenant le crottin de cheval, la bouse de vache, les excréments de volaille, de la paille de blé ou d'autres cultures, du marc de raisin ou de café, des coques de fruits à coques tels que des noix ou des noisettes, des déchets ligneux tels que des branches, des feuilles, du gazon tondu ou des résidus de taille, ou leurs combinaisons. Le ou les agents rigidifiant désignent de l'amidon, du caoutchouc, du latex ou des algues. Les agents protecteurs désignent de l'huile végétale, notamment de colza, de tournesol ou de soja, ou toute autre huile végétale.

Selon un mode de réalisation, le ou les agents rigidifiants sont dispersés dans une phase non-aqueuse, comprenant par exemple des extraits huileux ou gras, de préférence d'origine végétale. Les ingrédients non liquides, tels que les excréments d'herbivores peuvent ainsi être aisément conditionnés pour une meilleure application et/ou diffusion dans le matériau de la paroi périphérique **12.** Cela n'exclut pas que des composants non solides soient aussi mélangés ou dissous dans une telle phase non-aqueuse. La phase non-aqueuse contenant le ou les agents rigidifiants **14** peut alors être dispersée ou appliquée sur l'une ou l'autre des surfaces interne **10a** et externe **10b,** ou les deux, de la paroi périphérique **12.** Alternativement, le matériau de la paroi périphérique **12** peut être immergé dans un bains non-aqueux comprenant un ou plusieurs agents rigidifiants **14** de sorte à en être imprégné.

Selon un mode de réalisation, la phase non-aqueuse est une huile végétale telle que de l'huile de tournesol. D'autres huiles végétales peuvent être utilisées. Il convient cependant de sélectionner les huiles les plus disponibles, notamment localement, et les moins chères.

Selon un mode de réalisation, le matériau de la paroi périphérique 12 est recouvert ou imprégné d'un agent protecteur permettant d'éviter la prolifération de germes, champignons et/ou moisissures potentiellement néfastes à la culture de plantes. Un tel agent protecteur permet en l'occurrence de recouvrir les fibres biodégradables de la paroi périphérique **12.** Il permet en outre d'en limiter son degré d'humidité. Il est en effet avantageux que le matériau de la paroi périphérique reste sec ou à un degré d'humidité faible, même après avoir été combiné avec un ou plusieurs des agents rigidifiants **14** pouvant eux-mêmes contenir de l'eau.

Selon un mode de réalisation, un tel agent protecteur consiste en la phase non-aqueuse utilisée pour disperser un ou plusieurs agents rigidifiants **14.**

De la sorte, le matériau de la paroi périphérique **12,** lorsqu'il est associé aux agents rigidifiants, reste à un degré d'humidité suffisamment bas pour limiter ou éviter la prolifération de germes ou de champignons. Il est entendu que disperser les agents rigidifiants dans une phase aqueuse n'est à ce titre pas optimal. Cela nécessiterait en outre de prévoir une étape de séchage, couteuse en temps et en énergie.

Selon les besoins, le ou les agents rigidifiants **14** peuvent être dispersés dans la phase non-aqueuse dans une proportion comprise entre 10% en masse et 80% en masse. Par exemple la proportion massique du ou des agents rigidifiants par rapport à la masse de la phase non-aqueuse peut être de l'ordre de 20%, 30% ou de 40% ou de 50%. D'autres proportions peuvent bien entendu être considérées selon les situations.

Le ou les agents rigidifiants, associés à la phase non-aqueuse, peuvent être appliqués sur une surface de la paroi périphérique **12** ou sur les deux surfaces. Du fait de la nature fibreuse de la paroi périphérique et des agents rigidifiants et de la présence d'une phase non-aqueuse, les agents rigidifiants s'agglomèrent aisément au matériau de la paroi périphérique **12.** Une opération de pressage, telle qu'un pressage modéré à température ambiante, peut être envisagée pour mieux faire pénétrer les fibres du ou des agents rigidifiants dans celles de la paroi périphérique **12** si nécessaire. Une telle opération de pressage, permettant par exemple de précontraindre le tapis végétal, en augmente sa densité, le cas échéant. Alternativement, une telle opération de pressage peut permettre d'agglomérer le matériau biodégradable, de sorte à en faire une préforme.

Alternativement ou en plus, une opération de formage sous presse, à des température supérieures à la température ambiante, comme décrit plus loin, peut permettre de rigidifier la paroi périphérique 12 au moment du formage du pot. Le formage peut être effectué à des pressions plus élevées que celles utilisées pour précontraindre le tapis, ou agglomérer le matériau biodégradable.

Dans le cas où plusieurs agents rigidifiants sont combinés au matériau de la paroi périphérique **12,** ils peuvent ne pas être tous mis en suspension dans une phase non-aqueuse. Par exemple, un premier agent rigidifiant **14** telle que de la bouse de vache ou un mélange de bouse de vache et de crottin de cheval, peut être mis en suspension dans une phase non-aqueuse et un second agent rigidifiant peut ensuite être appliqué sous forme liquide ou visqueuse directement sur la paroi périphérique 12. Cette application peut être effectuée après une opération de préformage ou une opération de formage. Ces dispositions peuvent s'appliquer lorsque le matériau est sous forme d'aggloméra.

Selon une alternative, l'agent protecteur est un des agents rigidifiants **14.** En l'occurrence, lorsqu'il s'agit d'extraits végétaux liquides ou visqueux, ils peuvent être disposés directement sur une surface de la paroi périphérique **12** ou les deux surfaces, jouant ainsi à la fois le rôle d'agent protecteur et d'agent rigidifiant. Des extraits tels que le latex, l'amidon ou le caoutchouc peuvent être utilisés à cette fin.

Selon un mode de réalisation, un agent rigidifiant solide peut être dispersé dans un autre agent rigidifiant de type liquide ou visqueux avant d'être appliqué ou combiné au matériau de la paroi périphérique **12.** Dans ce cas le second agent rigidifiant fait office d'agent protecteur également. Un extrait de bouse de vache peut être combiné à un extrait végétal comme du latex, de l'amidon ou du caoutchouc avant d'être combiné au matériau de la paroi périphérique **12.**

Le ou les agents rigidifiants **14** sont combinés au matériau de la paroi périphérique **12** dans une proportion massique d'agent rigidifiant **14** par rapport au matériau de la paroi périphérique **12** de l'ordre de 15% à 40%, de préférence de l'ordre de 20% à 30%.

L'agent protecteur est présent dans une proportion massique de 5% à 30% par rapport au matériau de la paroi périphérique **12.** Les proportions peuvent être adaptées selon les besoins, par exemple entre 10 % et 20% en masse.

Selon un mode de réalisation, l'une des faces interne **10a** ou externe **10b** du pot **1** peut être revêtue d'une substance carbonée **15.** De préférence, la face interne **10a** est revêtue d'une telle substance. La substance carbonée **15** peut être du charbon issu de la pyrolyse de biomasse. Comme pour le matériau de la paroi périphérique **12,** la biomasse utilisée pour la matière carbonée **15** est de préférence issue de sources non spécifiquement dédiées à cet usage mais de déchets non valorisables ou difficilement valorisable autrement, tel que le déboisement, le défrichage, le maraichage, les activités d'entretien d'espaces verts, y compris en zone urbaine, les opérations de nettoyage etc.

Selon un mode de réalisation, la couche de matière carbonée **15** est dispersée sur la surface de la paroi périphérique **12** sous la forme d'une suspension dans une phase non-aqueuse, qui peut être identique ou différente de celle utilisée pour le ou les agents rigidifiants **14.** La proportion en masse de matière carbonée **15** par rapport à la masse du matériau utilisé pour la paroi périphérique **12** est comprise de préférence entre 10% et 30%, plus avantageusement de l'ordre de 15% à 25%..

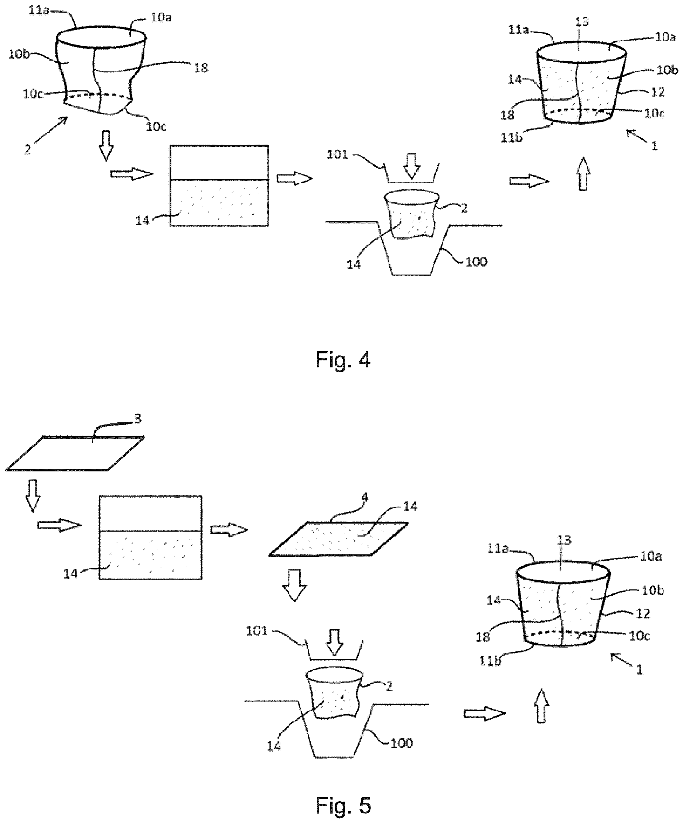

Le pot **1** selon la présente invention peut être formé à partir d'une ébauche souple **2** composée d'un feutre ou d'une feutrine sans agent rigidifiant (Figure 4). L'ébauche peut ensuite être traitée avec un agent rigidifiant **14.** À cet effet, elle peut être immergée dans un bain comprenant un tel agent rigidifiant **14,** soit à l'état pur soit suspendu ou mélangé à une phase non-aqueuse. Alternativement, le feutre ou la feutrine peut être aspergée d'un ou plusieurs agents rigidifiants. L'ébauche ainsi traitée peut ensuite être impliquée dans une opération de formage pour lui conférer la forme rigide finale. L'opération de formage peut être opérée par exemple sous une presse **101** ayant la forme complémentaire d'un moule **100** et donnant au pot la forme requise. Le formage peut être effectué à température ambiante ou à des températures plus élevées.

Alternativement, l'ébauche **2** est directement formée à partir d'un tapis **3** de feutre ou de feutrine imprégné par un ou plusieurs agents rigidifiant **14** pour conduire à un tapis imprégné **4** (figure 5). L'ébauche **2** est comme précédemment impliquée dans une opération de formage pour conduit au pot 1 rigide. L'imprégnation du tapis **3** peut être effectuée par immersion dans un bain ou par aspersion ou par tout autre moyen similaire.

La paroi périphérique **12** du pot **1** résulte de l'enroulement du feutre ou de la feutrine dont les extrémités sont jointes pour former une jointure **18** parcourant la paroi périphérique **12** depuis le bord supérieur **11a** jusqu'au bord inférieur **11b** du pot **1.** Les extrémités du feutre ou de la feutrine peuvent ainsi se recouvrir. Elles peuvent être maintenues ensemble par simple collage lors de l'opération de formage, en présence notamment des agents rigidifiants **14,** qui peuvent avoir des propriétés de collage. Alternativement ou en plus, elles peuvent être maintenues ensemble par tout moyen adéquat tels que des agrafes, un ou plusieurs liens périphériques tel qu'une lanière de chanvre ou tout équivalent. Le pot selon la présente invention peut comporter plusieurs lignes de jonction **18,** en l'occurrence deux lignes de jonctions **18,** disposées symétriquement l'une de l'autre par rapport au centre du pot, et résultant de la combinaison de deux parties **3a, 3b** d'un tapi de feutre **3.** D'autres arrangement peuvent néanmoins être mis en oeuvre.

Alternativement, le pot selon la présente invention ne comporte pas de lignes de jonction **18.** La parois périphérique **12** comporte ou est constituée d'un agglomérat de matériau biodégradable, tel que des fibres végétales. La forme du pot est obtenue en une étape par pressage du matériau biodégradable dans un état dispersé, de sorte à le compacter et à lui conférer sa forme finale.

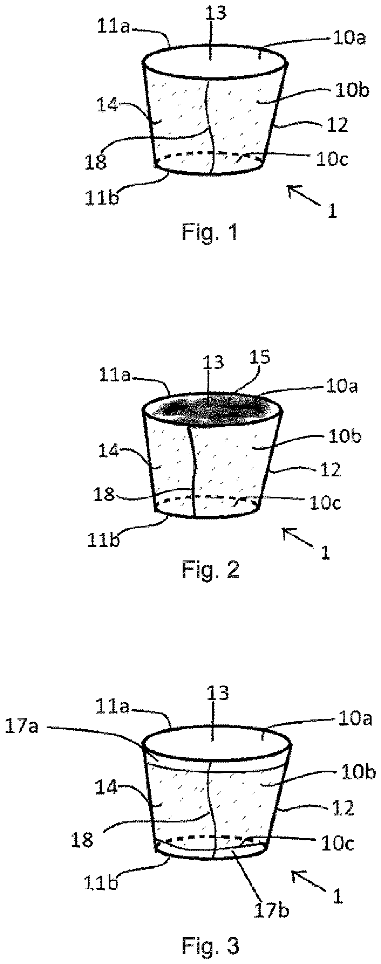

Selon un mode de réalisation, l'agent rigidifiant **14** comprend ou consiste en un revêtement d'argile **17** (figure 3). Il peut être disposé sur le bord supérieur **11a** du pot, par exemple en immergeant la partie supérieure de la paroi périphérique **12** dans un bain d'argile. Alternativement, une proportion d'argile peut être combinée à un des autres agents rigidifiants **14** mentionnés plus haut, tels que de la bouse de vache. Dans ces conditions, la proportion d'argile est suffisamment faible pour se désagréger ou se disperser lors de la biodégradation de la paroi périphérique **12.** Alternativement ou en plus, un second liseré d'argile **17b** peut être déposé au niveau du bord inférieur **11b** du pot **1.** L'argile peut être disposé après une étape de formage ou en remplacement d'une telle étape de formage. Dans ce dernier cas, l'argile disposé sur la paroi périphérique **12** est suffisamment rigide pour maintenir la forme tridimensionnelle du pot **1.** De préférence, l'argile est disposé sur l'un ou l'autre des bords supérieur **11a** et inférieur **11b** après une étape de formage. Ainsi, la forme tridimensionnelle du pot **1** résultant de l'étape de formage peut être préservée lors des multiples manipulations ou manutentions du pot **1.** Dans ce dernier cas, la quantité de matière utilisée pour la confection de la paroi périphérique **12** peut être diminuée, sachant que la forme tridimensionnelle du pot **1** restera stable grâce à l'argile.

Après l'étape de formage, et potentiellement après l'étape de consolidation avec de l'argile, une étape de cuisson ou d'étuve peut être envisagée. Une telle étape permet d'éliminer l'humidité résiduelle dans les fibres et d'améliorer la robustesse du pot.

Selon un mode de réalisation les pot de la présente invention se déclinent en différent diamètres comprise entre 3 cm à 40 cm, comme suit :
Pot de 3 cm de diamètre : Volume d'environ 0,021 litre
Pot de 4,5 cm de diamètre : Volume d'environ 0,09 litre
Pot de 6 cm de diamètre : Volume d'environ 0,3 litre
Pot de 7 cm de diamètre : Volume d'environ 0,5 litre
Pot de 8 cm de diamètre : Volume d'environ 0,7 litre
Pot de 10 cm de diamètre : Volume d'environ 1,0 litre
Pot de 12 cm de diamètre : Volume d'environ 1,5 litre
Pot de 15 cm de diamètre : Volume d'environ 3,0 litres
Pot de 20 cm de diamètre : Volume d'environ 6,0 litres
Pot de 25 cm de diamètre : Volume d'environ 10 litres
Pot de 30 cm de diamètre : Volume d'environ 15 litres
Pot de 35 cm de diamètre : Volume d'environ 20 litres
Pot de 40 cm de diamètre : Volume d'environ 30 litres

La présente invention couvre en outre un procédé de fabrication d'un pot 1 selon la présente description. En particulier, le pot 1 est fabriqué à partir d'un matériau biodégradable tel que ceux mentionnés plus haut.

Selon un mode de réalisation, le matériau biodégradable et utilisé sous forme d'un tapis de feutre 3 ou de feutrine, de forme plane, enroulé sur lui-même de sorte à former la paroi périphérique **12** et le fond du pot. Le tapis de feutre **3** peut être produit par tout procédé standard déjà connu à partir des fibres végétales disponibles, dans un grammage adapté aux besoins et aux éventuels additifs prévus dans la fabrication du pot 1. Le feutre **3** est utilisé sec. Une étape de séchage ou d'étuvage peut être prévue si besoin, de sorte à limiter ou éviter toute humidité.

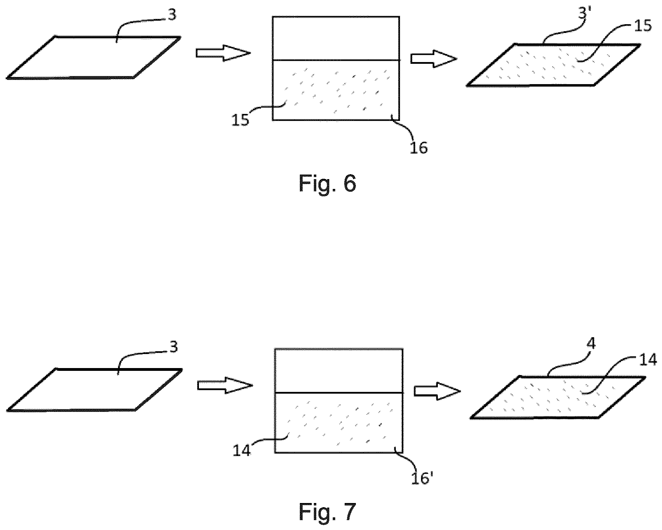

Le procédé selon la présente invention peut comporter une étape de revêtir au moins une surface du tapis de feutre **3,** lorsqu'il est utilisé, par une matière carbonée **15** (figure 6). Pour ce faire, une quantité de matière carbonée **15** telle que du charbon issu de la pyrolyse de biomasse est mise en suspension dans une phase non-aqueuse **16.** La phase non-aqueuse **16** peut être un des composant mentionnés plus haut, notamment de l'huile de tournesol ou tout autre huile végétale. Selon un mode de réalisation, la phase non-aqueuse fait office d'agent rigidifiant **14.** La suspension de matière carbonée **15** peut être aspergée sur une surface du tapis, au moyen par exemple d'une ou plusieurs buses d'aspersion connectées à une cuve contenant la suspension de matière carbonée **15.** Le tapis peut à cet effet être entraîné sur un convoyeur de sorte à être aspergé en continu. Plusieurs tapis peuvent ainsi être traités de manière industrielle. Alternativement ou en plus, un applicateur mécanique (non représenté) peut être utilisé pour homogénéiser le revêtement de matière carbonée **15** sur la surface du tapis **3.** Un tel applicateur peut prendre la forme d'un rouleau, ou d'une règle pouvant se déplacer sur la surface du tapis **3** pour en étaler les éventuels résidus. D'autres moyens mécaniques d'application peuvent être envisagés.

L'application de la matière carbonée **15** peut être effectuée en un seul passage. Alternativement, plusieurs passages peuvent être prévus selon les besoins. Selon un mode de réalisation, le tapi de feutre **3** peut être retourné pour que la seconde surface, opposée à la première surface, soit aussi revêtue de matière carbonée **15.** Le retournement peut être manuel ou bien mécanisé, par exemple via un rouleau de convoyage. Une même face du tapis peut être aspergée plusieurs fois. Alternativement ou en plus, plusieurs buses d'aspersions peuvent être disposées de part et d'autre du tapis de feutre 3 de sorte à revêtir les deux surfaces opposées du tapis en un seul passage. Alternativement, deux tapis de feutre **3** superposés peuvent être aspergés par des buses d'aspersion montées en vis-à-vis. Dans ces conditions, un seul passage permet de traiter une surface de deux tapis de feutre **3,** leur surface en contact l'une de l'autre restant vierge de matière carbonée **15.**

Selon un mode de réalisation alternatif, le tapis **3** peut être immergé dans un bain contenant la matière carbonée **15** en suspension. Cette alternative nécessite cependant plus de matière carbonée ou de phase non-aqueuse et peut ne pas être privilégiée.

A l'issu de cette étape, un tapis revêtu **3'** est obtenu, lequel comprend un revêtement de matière carbonée sur au moins une de ses faces.

Le tapis 3 peut ne pas être revêtu de matière carbonée **15** avant sa mise en forme d'ébauche. Dans ce cas, la matière carbonée **15** peut être appliquée après une opération de pressage ou de préforme.

Le procédé selon la présente invention comporte une étape de traitement du feutre **3** ou du tapis **3'** une fois revêtu de matière carbonée, au moyen d'au moins un agent rigidifiant **14** (figure 7). De manière similaire à l'étape de revêtement avec une matière carbonée **15,** le traitement par un agent rigidifiant se fait de préférence par aspersion. Les dispositions décrite ci-dessus sont applicables pour cette étape. Le ou les agents rigidifiant **14** peuvent être mis en suspension dans une phase non-aqueuse **16'.** Une ou plusieurs aspersions conduisent à l'obtention d'un tapis imprégné 4 comprenant au moins un agent rigidifiant **14.** L'ordre des étapes de revêtement et d'imprégnation importe peu et peut être adapté selon les besoins.

Selon un mode de réalisation, seule une étape d'imprégnation par un agent rigidifiant est effectuée. Dans ce cas, aucune étape de revêtement de matière carbonée n'est réalisée.

Selon un mode de réalisation, le tapis **3** peut être convoyé mécaniquement devant plusieurs stations de traitement. L'une des stations de traitement peut être adaptés au revêtement d'au moins une surface du tapis 3 avec une matière carbonée **15** pour conduire au tapi **3'** revêtu de la matière carbonée. Une autre station de traitement peut être adaptée à l'imprégnation du tapis pour conduire à un tapis **4** imprégné d'agent rigidifiant. Les deux de ces étapes peuvent être mises en oeuvre successivement et individuellement. L'ordre des étapes n'est pas déterminant et peut être adapté selon les contraintes ou les besoins. Alternativement, une même station de traitement peut être adaptée à revêtir la surface du tapis 3 et à l'imprégner d'agent rigidifiant.

Alternativement, seulement l'une de ces deux étapes est mise en oeuvre.

De préférence, à l'issue d'au moins l'une des étapes de revêtement et d'imprégnation, le tapis est également imprégné d'un agent protecteur, qui peut être inclus dans, ou constituer, la phase non-aqueuse.

A l'issue des étapes de revêtement et/ou d'imprégnation, le tapis n'a pas besoin de subir une étape de séchage, du fait notamment de son absence de contact avec l'eau ou l'humidité. La phase non-aqueuse est adaptée à maintenir le tapis non-humide. Le tapis peut être préparé à la demande de sorte à éviter le stockage prolongé de tapis imprégnés, dont l'agent protecteur pourrait se dégrader avec le temps.

Une étape de pressage à plat sous une pression intermédiaire peut être envisagée pour améliorer l'imprégnation et/ou le revêtement de matière carbonée **15.**

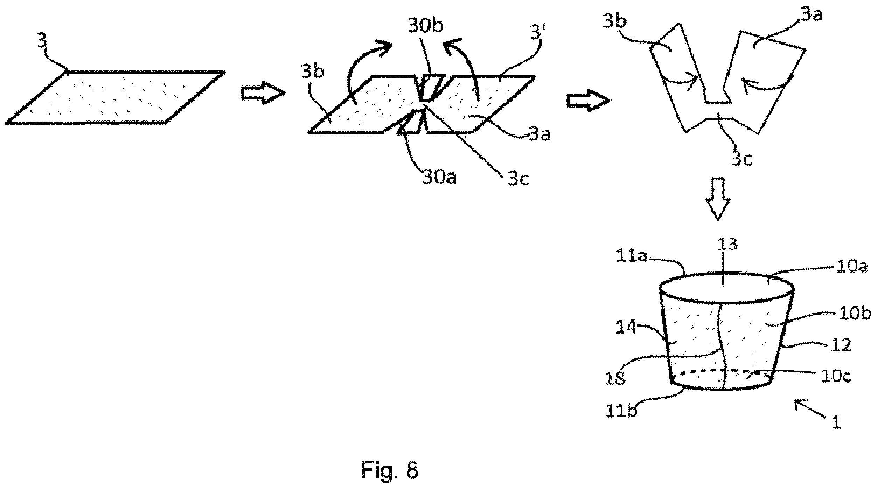

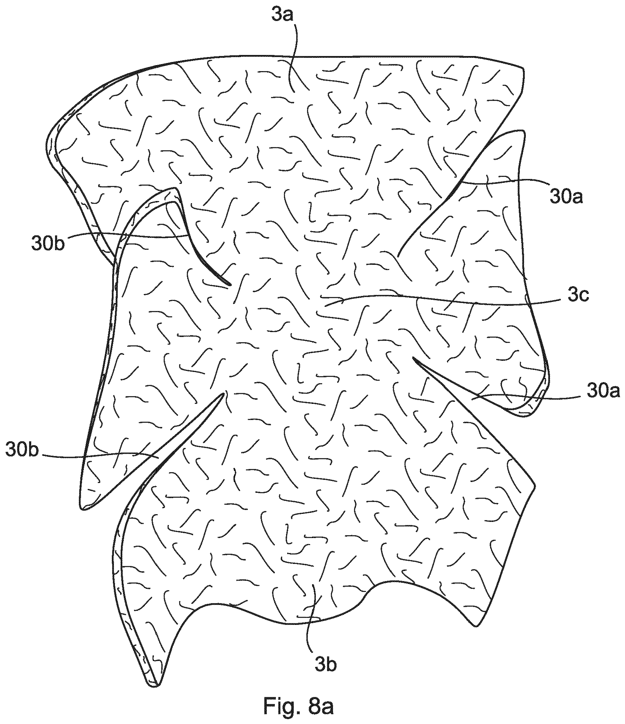

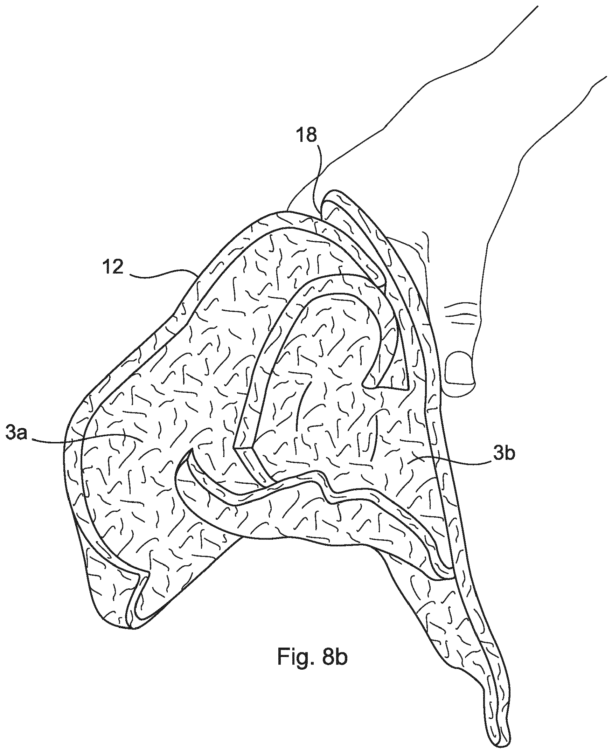

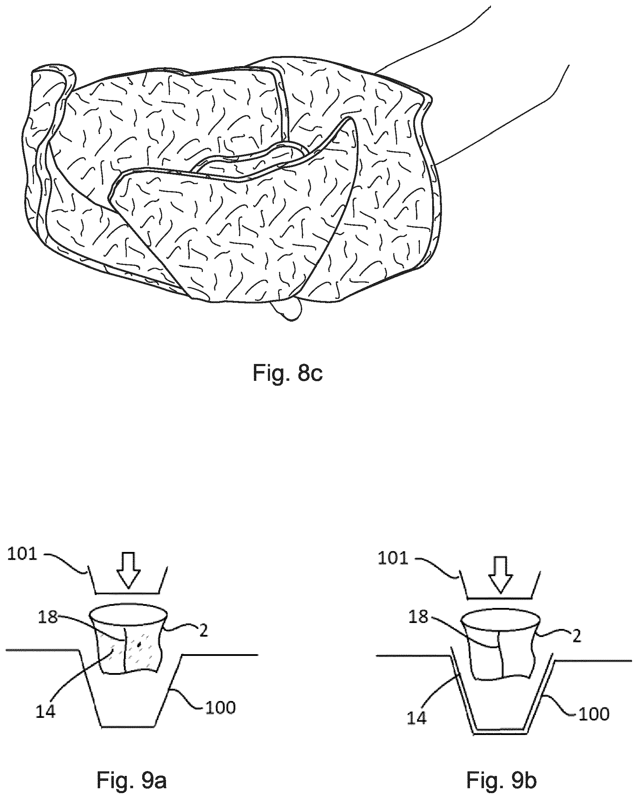

Le procédé selon la présente invention comporte une étape de découpe (figures 8, 8a, 8b, 8c) lors de laquelle une ou plusieurs découpes sont effectuées sur le tapis, lorsqu'il est en position plane. Par exemple une opération de découpe peut être prévue pour ménager des encoches **30a, 30b** sur le tapis **3.** Il en résulte un ensemble de deux parties **3a, 3b** réunies par une portion plus étroite **3c** au niveau des encoches **30a, 30b.** Les parties **3a, 3b** peuvent ainsi être relevées face à face puis enroulées de sorte que leurs bords se rejoignent ou se recouvrent. La jonction de deux bords adjacents forment une ou plusieurs lignes de jonction **18.**

L'étape de découpe peut comporter d'autres opérations de découpe. Par exemple, les dimensions du tapis **3** peuvent être adaptées aux dimensions du pot à fabriquer. La longueur du tapis **3** peut ainsi être adaptée à la circonférence du pot et sa largeur à la hauteur du pot **1.** Les découpes peuvent être effectuées tapis par tapis, notamment dans le cas où les tapis sont convoyés de manière automatique. Alternativement, les découpes ou certaines des découpes peuvent être effectuées sur un ensemble de tapis disposés en strates de sorte à découper un lot de tapis en une seule opération.

Les opérations de découpe peuvent être effectuées à n'importe quel moment avant l'étape de façonnage des pots **1.** Par exemple, elle peuvent être effectuées avant ou après l'une ou l'autre des étapes de revêtement ou d'imprégnation.

Après les opérations de découpe le tapis **3** est impliqué dans une étape de façonnage pour conduire à une ébauche **2** (Figure 5) consistant à joindre les deux parties **3a** et **3b** du tapis résultant de leur découpe. Le tapis n'est alors plus sous forme plane mais décrit une forme tridimensionnelle souple. L'ébauche **2** peut être comprise comme désignant une préforme.

Le présent procédé comporte une étape de formage du pot **1** visant à lui conférer une forme tridimensionnelle rigide (figures 9a, 9b). Selon un mode de réalisation représenté par la figure **9a****,** l'ébauche ou la préforme **2** est disposée dans un moule **100** dont la forme tridimensionnelle représente celle du pot à fabriquer. L'ébauche est à ce stade imprégnée d'au moins un agent rigidifiant **14.** Elle peut en outre être revêtue d'une matière carbonée **15** ou non. Sous la pression d'un outil **101** de forme complémentaire de celle du moule **100,** le matériau de la paroi périphérique **12** est compacté avec le ou les agents rigidifiants **14.** En conséquence, l'épaisseur en est réduite, mais la rigidité en est accrue. La densité qui résulte de ce compactage est accrue.

Selon une variante, illustrée à la figure 9b, le matériau de la paroi périphérique **12** n'est pas imprégné d'agent rigidifiant **14.** Dans ce cas, le ou les agents rigidifiants **14** sont disposés dans le moule **100** et s'agglomèrent à la paroi périphérique **12** lors du pressage du pot avec l'outil de pressage **101.**

Le formage du pot selon l'une ou l'autre des méthodes illustrées plus haut par les figures 9a et 9b peut être effectué à température ambiante. Alternativement, le moule **100** et/ou l'outil de pressage **101** peuvent être thermorégulés de sorte à presser l'ébauche **2** à une température contrôlée supérieure à la température ambiante. Une température comprise entre 50°C et 150°C, telle que 50°C ou 100°C ou 150°C peut être envisagée. Cela procure l'avantage supplémentaire de sécher les éventuelles traces d'humidités résiduelles. Les agents rigidifiants ou certains d'entre eux peuvent en outre se solidifier sous l'influence combinée de la chaleur et de la pression, conduisant ainsi au pot formé rigide.

Selon un mode de réalisation, le matériau biodégradable est utilisé sous forme d'un agglomérat **19.** Un agglomérat désigne une matière dispersée ou de faible cohésion. Un agglomérat est de préférence utilisé sec. Une étape de séchage ou d'étuvage peut être prévue si besoin, de sorte à limiter ou éviter toute humidité.

L'agglomérat peut être mélangé à une matière carbonée **15.** Pour ce faire, une quantité de matière carbonée **15** telle que du charbon issu de la pyrolyse de biomasse est mise en suspension dans une phase non-aqueuse **16.** La phase non-aqueuse **16** peut être un des composant mentionnés plus haut, notamment de l'huile de tournesol ou tout autre huile végétale. Selon un mode de réalisation, la phase non-aqueuse fait office d'agent rigidifiant **14.** La suspension de matière carbonée **15** peut être aspergée sur l'agglomérat **19,** au moyen par exemple d'une ou plusieurs buses d'aspersion connectées à une cuve contenant la suspension de matière carbonée **15.** L'agglomérat **19** peut à cet effet être entraîné sur un convoyeur de sorte à être aspergé en continu. L'agglomérat **19** peut ainsi être traité de manière industrielle. Alternativement ou en plus, un mélangeur mécanique (non représenté) peut être utilisé pour homogénéiser l'agglomérat **19** et la matière carbonée **15.** Un tel mélangeur peut prendre la forme d'un peigne permettant de disperser et d'homogénéiser l'agglomérat. Alternativement, il peut prendre la forme d'un tambour rotatif ou toute autre forme adéquate.

Selon un mode de réalisation l'agglomérat **19** fait l'objet d'un pressage à plat de sorte une nappe de matériau biodégradable. La nappe de matériau biodégradable peut être impliquée dans le procédé comme exposé plus haut avec le tapis **3.**

Ainsi, la matière carbonée **15** peut être appliquée sur la nappe en un seul passage ou plusieurs passages. Selon un mode de réalisation, la nappe peut être retournée pour que la seconde surface, opposée à la première surface, soit aussi revêtue de matière carbonée **15.** Une même face de la nappe peut être aspergée plusieurs fois. Alternativement ou en plus, plusieurs buses d'aspersions peuvent être disposées de part et d'autre de la nappe de sorte à revêtir ses deux surfaces opposées en un seul passage. Alternativement, deux nappes superposées peuvent être aspergées par des buses d'aspersion montées en vis-à-vis. Dans ces conditions, un seul passage permet de traiter une surface de deux nappes, leur surface en contact l'une de l'autre restant vierge de matière carbonée **15.**

Selon un mode de réalisation alternatif, l'agglomérat **19** peut être immergé dans un bain contenant la matière carbonée **15** en suspension. Cette alternative nécessite cependant plus de matière carbonée ou de phase non-aqueuse et peut ne pas être privilégiée.

A l'issu de cette étape, mélange de matériau biodégradable et de matière carbonée est obtenu.

L'agglomérat peut néanmoins ne pas être mélangé à la matière carbonée avant sa mise en forme de pot décrite plus loin. Dans ce cas, la matière carbonée **15** peut être appliquée après une opération de pressage ou de préforme.

L'agglomérat **19,** mélangé ou non à la matière carbonée, peut être traité au moyen d'au moins un agent rigidifiant **14.** De manière similaire à l'étape de revêtement avec une matière carbonée **15,** le traitement par un agent rigidifiant se fait de préférence par aspersion. Les dispositions décrites ci-dessus sont applicables pour cette étape. Le ou les agents rigidifiant **14** peuvent être mis en suspension dans une phase non-aqueuse **16'.** Une ou plusieurs aspersions conduisent à l'obtention d'un agglomérat **19** comprenant au moins un agent rigidifiant **14.** L'ordre des étapes de revêtement et d'imprégnation importe peu et peut être adapté selon les besoins.

Selon un mode de réalisation, seule une étape d'imprégnation de l'agglomérat **19** par un agent rigidifiant est effectuée. Dans ce cas, aucune étape de mélange ou de revêtement de matière carbonée n'est réalisée.

Selon un mode de réalisation, l'agglomérat **19** peut être convoyé mécaniquement devant plusieurs stations de traitement. L'une des stations de traitement peut être adaptées au mélange ou au revêtement du matériau biodégradable avec une matière carbonée **15.** Une autre station de traitement peut être adaptée à l'imprégnation de l'agglomérat **19** pour conduire à un agglomérat **19** imprégné d'agent rigidifiant. Les deux de ces étapes peuvent être mises en oeuvre successivement et individuellement. L'ordre des étapes n'est pas déterminant et peut être adapté selon les contraintes ou les besoins. Alternativement, une même station de traitement peut être adaptée à mélanger l'agglomérat avec de la matière carbonée et à l'imprégner d'agent rigidifiant.

Alternativement, seulement l'une de ces deux étapes est mise en oeuvre.

De préférence, à l'issue d'au moins l'une des étapes de mélange avec la matière carbonée et d'imprégnation avec un ou plusieurs agent rigidifiants, l'agglomérat **19** est également imprégné d'un agent protecteur, qui peut être inclus dans, ou constituer, la phase non-aqueuse.

A l'issue des étapes de mélange avec la matière carbonée **15** et/ou d'imprégnation, l'agglomérat **19** n'a pas besoin de subir une étape de séchage, du fait notamment de son absence de contact avec l'eau ou l'humidité. La phase non-aqueuse est adaptée à maintenir l'agglomérat non-humide. L'agglomérat 19 peut être préparé à la demande de sorte à éviter son stockage prolongé, dont l'agent protecteur pourrait se dégrader avec le temps.

Une étape de pressage à plat sous une pression intermédiaire peut être envisagée pour améliorer l'imprégnation et/ou le mélange avec la matière carbonée **15.** Cette étape peut permettre de produire une nappe, conférant une meilleure cohésion de l'agglomérat **19,** qui peut alors être manipulé plus facilement. Dans ce cas, une étape de découpe peut être envisagée, comme exposée plus haute dans le cas du tapis **3.**

Dans le cas où une nappe est produite à partir de l'agglomérat **19,** les opérations de découpe, si elles ont lieu, peuvent être effectuées à n'importe quel moment avant l'étape de façonnage des pots **1.** Par exemple, elle peuvent être effectuées avant ou après l'une ou l'autre des étapes de mélange avec la matière carbonée **15** ou d'imprégnation avec un agent rigidifiant.

La nappe, si elle est produite, peut être impliquée dans une étape de façonnage identique ou similaire à celle décrite pour le tapis **3.**

Le pot peut alors être impliqué dans une étape de formage visant à lui conférer une forme tridimensionnelle rigide, comme décrit plus haut pour le tapis. La nappe peut être disposée dans un moule **100** dont la forme tridimensionnelle représente celle du pot à fabriquer. Elle est à ce stade imprégnée d'au moins un agent rigidifiant **14.** Elle peut en outre être revêtue d'une matière carbonée **15** ou non. Sous la pression d'un outil **101** de forme complémentaire de celle du moule **100,** le matériau de la paroi périphérique **12** est compacté avec le ou les agents rigidifiants **14.** En conséquence, l'épaisseur en est réduite, mais la rigidité en est accrue. La densité qui résulte de ce compactage est accrue.

Selon une variante, le matériau de la paroi périphérique **12** n'est pas imprégné d'agent rigidifiant **14.** Dans ce cas, le ou les agents rigidifiants **14** sont disposés dans le moule **100** et s'agglomèrent à la paroi périphérique **12** lors du pressage du pot avec l'outil de pressage **101.**

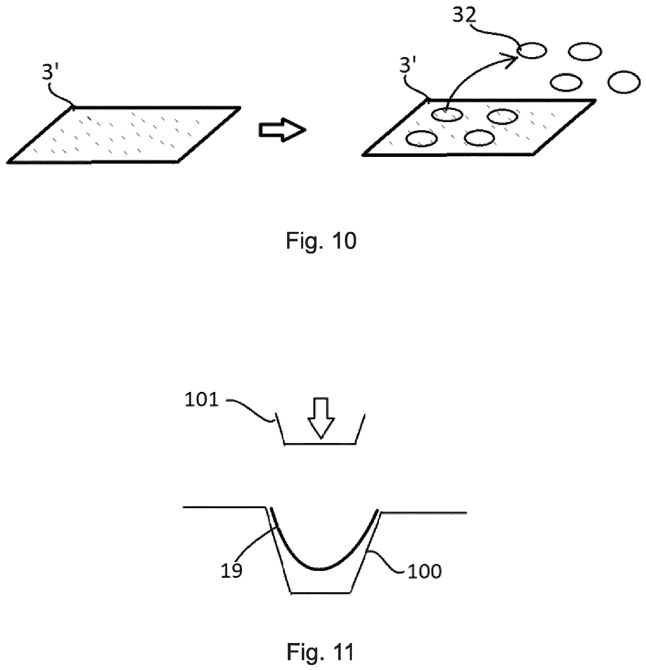

Selon un mode de réalisation privilégié, l'agglomérat **19** est disposé dans le moule **100** en présence d'au moins un agent rigidifiant **14** et est directement pressé avec l'outil de pressage **101** (figure 11). De la sorte, aucune opération préalable de mélange avec la matière carbonée **15** et/ou les agents rigidifiants **14** n'est nécessaire. L'agglomérat 19 peut avoir été au préalable aspergé ou mélangé avec la phase non-aqueuse **16** comme décrit plus haut. Alternativement, l'agglomérat **19** est disposé dans le moule **100** en présence de la phase non-aqueuse **16** et d'un ou plusieurs agents rigidifiants **14.** L'ensemble de ces constituants s'homogénéise lors du pressage avec l'outils de pressage.

Le formage du pot selon l'une ou l'autre des méthodes illustrées plus haut pour l'agglomérat **19** peut être effectué à température ambiante. Alternativement, le moule **100** et/ou l'outil de pressage **101** peuvent être thermorégulés de sorte à presser l'agglomérat **19,** ou la nappe correspondante, à une température contrôlée supérieure à la température ambiante. Une température comprise entre 50°C et 150°C, telle que 50°C ou 100°C ou 150°C peut être envisagée. Cela procure l'avantage supplémentaire de sécher les éventuelles traces d'humidités résiduelles. Les agents rigidifiants ou certains d'entre eux peuvent en outre se solidifier sous l'influence combinée de la chaleur et de la pression, conduisant ainsi au pot formé rigide.

Selon un mode de réalisation, l'agglomérat 19 est injecté dans un moule adéquat. Les températures et les pressions appliquées sont ajustables en fonction de la nature de l'agglomérat.

Le procédé selon la présente invention peut en outre comporter une étape de fixation, permettant de pérenniser la forme tridimensionnelle du pot. Une telle étape peut comprendre l'agrafage des première **3a** et seconde **3b** parties ensemble, dans le cas où un tapis **3** est utilisé, de sorte à consolider le recouvrement des bords de la paroi périphérique **12.** Alternativement ou en plus, un lien peut être apposé sur la circonférence du pot pour maintenir la cohésion des première **3a** et seconde **3b** parties. Le lien est de préférence biodégradable. Il peut être fait en fibres végétales telles que du chanvre ou du lin. La fixation peut intervenir après l'étape de formage. Alternativement, la fixation intervient après l'étape de façonnage de sorte à maintenir ensembles les bords respectifs des première **3a** et seconde **3b** parties.

Dans le cas où l'agglomérat est utilisé, l'étape de fixation peut être inutile, notamment si l'agglomérat est directement pressé dans le moule.

Le précédé selon la présente invention peut en outre comporter une étape de renforcement après le formage. Le renforcement peut être effectué au moyen d'un liseré d'argile sur au moins l'un des bords supérieurs **11a** et inférieur **11b.** Le trempage de l'un de ces bords dans un bain d'argile permet une mise en oeuvre simple de cette opération.

Selon un mode de réalisation le contenant selon la présente description est un sac de lestage, ou un sac à silo. L'enseignement décrit ci-dessus pour les pots est applicable de manière identique aux sacs de lestage. Une ou plusieurs des étapes décrites pour la confection des pots sont également applicable pour la confection des sacs de lestage. La différence principale réside dans la taille des sacs de lestage. Leur paroi périphérique 12 représente ainsi une hauteur de plusieurs dizaines de centimètres, par exemple de 15 à 150 cm ou de l'ordre de 20 à 100 cm. Le feutre ou la feutrine utilisée doit en conséquence présenter une rigidité suffisante. Le procédé décrit plus haute est parfaitement adapté à la production de tels sacs de lestage, que ces sacs soient confectionnés à partir d'un feutre ou d'une feutrine, ou d'un agglomérat, lequel peut être utilisé sous forme de nappe ou directement pressé dans un moule **100.**

Selon un mode de réalisation, un contenant selon la présente invention comporte une double paroi. Cela peut-être particulièrement avantageux pour renforcer les contenants les plus volumineux. En l'occurrence, l'ensemble ou une partie des étapes décrites ci-dessus peut être réalisées de sorte à obtenir un pot ou un sac de lestage selon l'invention, lequel peut être impliqué à nouveau dans une ou plusieurs des étapes décrites ci-dessus. Par exemple, un pot ou un sac de lestage produit comme indiqué, peut-être combiné avec un nouveau feutre ou une nouvelle feutrine, préparée comme indiqué ci-dessus puis pressé de sorte à combiner le second feutre ou feutre à la paroi périphérique initialement formée. Alternativement, une paroi périphérique déjà formée, peut être impliquée une nouvelle fois dans une étape de pressage en présence d'agglomérat, lequel se combine à la paroi périphérique 12. La forme et la rigidité des contenants selon la présente invention peut ainsi être adaptée selon leur taille et selon les besoins.

La présente invention couvre également un tapis biodégradable tel que le tapis **3'** revêtu de matière carbonée **15** ou le tapis imprégné **4** d'un agent rigidifiant **14** ou un tapis à la fois revêtu d'une matière carbonée **15** et d'au moins un agent rigidifiant **14.** Un tel tapis peut être utilisé dans le procédé tel que décrit plus haut pour la confection de pots biodégradables.

Le tapis peut être alternativement ou en outre impliqué dans une opération de pressage à plat au moyen d'un outil de pressage. L'épaisseur en est ainsi réduite et sa tenue mécanique est en accrue. Le tapis ainsi pressé peut alors être impliqué dans les étapes décrites plus haut pour la confection du pot 1. Le pressage à plat peut être effectué à n'importe quel moment avant l'étape de façonnage des pots. Il peut être par exemple effectué avant ou après l'une des étapes de revêtement ou d'imprégnation. Le pressage à plat n'exclut pas l'étape de formage sous pression. Le pressage à plat peut permettre de façonner plus facilement le feutre après les étapes de découpe. Il peut en outre permettre d'évacuer une partie de l'humidité résiduelle ou le surplus de la phase non-aqueuse. Il peut permettre en outre de mieux agglomérer les différents constituants, notamment la couche de matière carbonée **15** avec le matériau de la paroi périphérique **12.** Le pressage à plat peut être effectué à température ambiante ou à des températures supérieures.

La pression utilisée dans les étapes de pressage à plat le cas échéant, et de formage, sont adaptées. Le formage implique de préférence une pression supérieure à 10 ou 50 ou 100 bars. La pression utilisée dans l'étape de pressage à plat est de préférence inférieure à celle utilisée pour le formage. Le pressage à plat est ainsi vu comme une étape de précontrainte sans pour autant figer le feutre dans une forme définitive.

Selon un mode de réalisation, le tapis de la présente invention peut être utilisé pour d'autres applications que la fabrication de pots. En l'occurrence, le tapis peut être découpé sous forme de galettes **32** pouvant être utilisées comme géotextiles (figure 10). La dimension et/ou la forme des galettes **32** est adaptée pour recouvrir des pots de culture ou des jardinières. Selon un mode de réalisation, les pots selon la présente invention peuvent être assortis de telle galettes **32** permettant de recouvrir le substrat placé dans le pot et de protéger ainsi les cultures. Le tapis est de préférence découpé sous forme de galettes **32** après avoir subit un pressage à plat. Les galettes **32** peuvent être circulaires avec un diamètre compris entre 15 cm et 100cm, tel que 20 cm ou 30 cm ou 50 cm. Alternativement, elles peuvent être carrées ou rectangulaires avec un côté compris entre 5 cm et 100 cm, par exemple entre 20 et 100 cm, tel que 20 ou 30 ou 40 cm ou 50 ou 100 cm.

Selon un mode de réalisation, le tapis selon la présente invention est impliqué dans une opération de découpe permettant d'ajuster ses dimensions. Un tapis peut par exemple être produit sous forme de lés d'une longueur comprise entre 2 m et 50 m telle que 10 ou 15 ou 20 ou 25 mètres. La largeur des lès peut être comprise entre 20 et 220 cm, notamment 35 cm ou 40 cm ou 45 cm ou 50 cm. De la sorte, le tapis peut être utilisé comme géotextile au pieds de cultures extérieures comme des vignes. De préférence le tapis selon la présente invention subit un pressage à plat avant d'être conditionné sous forme de lés. Le tapis peut être enroulé et/ou emballé dans un conditionnement étanche pour éviter toute dégradation lors d'un stockage prolongé.

Les opérations de découpe du tapis ici-décrites peuvent s'appliquer à la nappe obtenue à parti d'un agglomérat **19.**

Selon un mode de réalisation, le tapis selon la présente description peut être utilisé comme isolant dans la construction de bâtiments.

Les contenants ici-décrits peuvent s'adapter aux différentes essences cultivées. Notamment les sacs de lestage permettent la culture de plantes aromatiques telles que la lavande, le thym, le romarin, et la ciboulette. De telles plantes peuvent ainsi bénéficier d'un substrat léger et drainant disposé dans le sac de lestage. Des légumes à racines peu profondes tels que la salade, les échalotes, les radis ou l'oignon blanc peuvent être cultivés dans des sacs de lestage, typiquement d'une contenance de l'ordre 20 litres. Des légumes à racines plus profondes tels que les pommes de terre et les tomates, ainsi que certains arbustes peuvent être cultivés dans des sacs de lestage d'un volume plus important, de l'ordre de 40 litres. D'autres types de plantes telles que des tomates, des tomates cerises ou d'autres plantes grimpantes peuvent être tutorées et cultivées dans des contenants appropriés. Les types de plantes cultivables ne sont pas limités aux essences mentionnées ici. Les fraises, les herbes aromatiques pour jardins verticaux d'intérieur tels que basilic, ciboulette, mélisse, aneth, coriandre lavande, marjolaine, menthe, origan, persil, romarin, sauge, stévia, agropyre, et thym, des légumes de potagers tels que haricots, concombres, ail, oignons, poivrons et salades peuvent idéalement être cultivés dans les présents contenants, notamment pour des agencements verticaux ou hors sols.

Les contenants selon la présente invention peuvent être remplis de plusieurs couches de substrats différents, notamment pout faciliter le drainage. Ils peuvent par exemple contenir une ou plusieurs couches de billes d'argile ou des matériaux drainant équivalents.

### Numéros de référence employés sur les figures

- 1: Pots
- 2: Ebauche
- 3, 3', 4: Tapis
- 3a, 3b 3c: Première et seconde encoches
- 30a, 30b: Première et secondes parties de tapis
- 10a: Face interne
- 10b: Face externe
- 11a: Bord supérieur
- 11b: Bord inférieur
- 10c: Fond
- 12: Paroi périphérique
- 13: Ouverture
- 14: Agent rigidifiant
- 15: Matière carbonée
- 17a, 17b: Liseré d'argile
- 18: Ligne de jonction
- 19: Agglomérat
- 100: Moule
- 101: Outils de formage

## Revendications

1. contant comprenant une paroi périphérique (12) biodégradable ayant un bord supérieur (11a) délimitant une ouverture supérieure (13) et un bord inférieur (11b) délimitant un fond (10c), la paroi périphérique comprenant ou étant constituée de matériaux biodégradables combinés à, ou comprenant au moins un agent rigidifiant naturel (14) adapté à rendre la paroi périphérique (12) rigide.

2. contenant selon la revendication 1, ladite paroi périphérique étant en outre imbibée d'un agent protecteur non-aqueux.

3. contenant selon l'une des revendications 1 et 2, ledit agent rigidifiant (14) désignant un excrément d'herbivore tel que de la bouse de vache ou du crottin de cheval, un extrait végétal tel que de l'amidon, du caoutchouc ou du latex ou une combinaison de ces composants.

4. contenant selon l'une des revendications 1 à 3, ledit agent rigidifiant (14) étant présent dans une proportion massique de 15% à 40% par rapport à la masse de la paroi périphérique (12).

5. contenant selon l'une des revendications 1 à 4, le grammage de ladite paroi périphérique (12) étant compris entre 200 et 2500 g/m².

6. contenant selon l'une des revendications 1 à 5, ladite paroi périphérique (12) étant sous forme d'un feutre de fibres végétales à base de chanvre, de jute, de lin ou de leurs mélanges.

7. contenant selon l'une des revendications 1 à 6, ledit agent protecteur non-aqueux étant une huile végétale ou un extrait végétal parmi le latex, l'amidon ou le caoutchouc, dans une proportion de 5% à 30% en masse par rapport à la paroi périphérique (12).

8. contenant selon l'une des revendications 1 à 7, l'une au moins des surfaces interne (10a) et externe (10b) étant revêtue d'une matière carbonée (15) dans une proportion de 10% à 30% en masse par rapport à la masse de la paroi périphérique (12).

9. Procédé de fabrication d'un contenant selon l'une des revendications 1 à 8, le précédé comprenant les étapes :
- de combiner un ou plusieurs matériaux biodégradables avec au moins un agent rigidifiant (14) biodégradables et un agent protecteur non-aqueux,
- de formage sous pression au moyen d'un moule (100) ayant la forme du contenant et d'un outil de pressage (101) de forme complémentaire,

10. Procédé selon la revendication 9, ledit un ou plusieurs matériaux biodégradable étant sous la forme d'un tapis de fibres végétales, le procédé comprenant les étapes de :
- découpe du tapis (3) de fibres végétales de sorte à produire une première (3a) et une seconde (3b) parties de tapis réunies par une portion plus étroite (3c),
- d'imprégnation dudit tapis (3) avec ledit au moins un agents rigidifiants (14) biodégradables,
- et de façonnage du contenant sous forme d'une ébauche souple, par redressement des première (3a) et seconde (3b) parties en vis-à-vis et appariement de leurs bords respectifs.

11. Procédé selon la revendication 9, ledit un ou plusieurs matériaux biodégradables étant sous la forme d'un agglomérat, le procédé comprenant les étapes de :
- mélanger l'agglomérat audit au moins un agent rigidifiant (14) biodégradables et un agent protecteur non-aqueux dans ledit moule (100) avant l'étape de formage.

12. Procédé selon l'une des revendications 9 et 10, comprenant en outre une étape de fixation permettant de fixer les bords respectifs des première (3a) et seconde (3b) parties avant ou après l'étape de formage.

13. Procédé selon l'une des revendications 9 à 12, comprenant en outre une étape de revêtement du matériau biodégradable par une matière carbonée (15), ladite matière carbonée étant en suspension dans une phase non-aqueuse.

14. Tapis de fibres végétales biodégradables comprenant un ou plusieurs agents rigidifiants naturels (14) adaptés à rigidifier le tapis, et un ou plusieurs agents protecteurs non-aqueux.

15. Tapis selon la revendication 14, ledit tapis étant sous forme de feutre compacté lors d'une opération de pressage à plat.
